(19) Europäisches Patentamt
European Patent Office
Office européen des brevets

(11) **EP 3 839 077 B1**

(12) **EUROPEAN PATENT SPECIFICATION**

(45) Date of publication and mention
of the grant of the patent:
**31.01.2024 Bulletin 2024/05**

(21) Application number: **19850412.8**

(22) Date of filing: **31.07.2019**

(51) International Patent Classification (IPC):
*C21C 7/072* (2006.01)    *G06T 7/60* (2017.01)
*F27D 21/02* (2006.01)    *C21C 5/46* (2006.01)
*G06T 7/00* (2017.01)

(52) Cooperative Patent Classification (CPC):
**F27D 21/02; C21C 5/4673; C21C 7/072;
G06T 7/0004;** C21C 2300/02; C21C 2300/06;
F27D 2021/023; F27D 2021/026;
G06T 2207/30136; Y02P 10/25

(86) International application number:
**PCT/KR2019/009556**

(87) International publication number:
**WO 2020/036346 (20.02.2020 Gazette 2020/08)**

(54) **REFINEMENT APPARATUS AND METHOD**

AUFBEREITUNGSVORRICHTUNG UND -VERFAHREN

APPAREIL ET PROCÉDÉ DE RAFFINAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.08.2018 KR 20180094395**

(43) Date of publication of application:
**23.06.2021 Bulletin 2021/25**

(73) Proprietor: **POSCO Co., Ltd
Pohang-si, Gyeongsangbuk-do 37859 (KR)**

(72) Inventors:
• **KIM, Sung Jool
Pohang-si, Gyeongsangbuk-do 37881 (KR)**
• **CHA, Woo Yeol
Pohang-si, Gyeongsangbuk-do 37878 (KR)**

• **HONG, Jae Suk
Pohang-si, Gyeongsangbuk-do 37618 (KR)**

(74) Representative: **Meissner Bolte Partnerschaft
mbB
Patentanwälte Rechtsanwälte
Postfach 86 06 24
81633 München (DE)**

(56) References cited:
CN-A- 107 608 397    CN-A- 108 241 384
JP-A- H03 260 025    JP-A- 2016 133 478
KR-A- 20010 057 957    KR-A- 20010 057 957
KR-A- 20120 073 412    KR-A- 20120 073 412
KR-A- 20140 017 151    US-A- 4 969 035

**Description**

## TECHNICAL FIELD

The present disclosure relates to a refinement apparatus and a refinement method, and more particularly, to a refinement apparatus and a refinement method, which are capable of exactly calculating a size of naked molten metal and appropriately adjusting a gas flow rate based on the calculated size during a LF refinement process.

## B. BACKGROUND ART

Molten steel produced from a converter refinement process is transferred to a ladle furnace (LF) refinement process for constituent adjustment, temperature control, and inclusion removal. Thereafter, the constituent of the molten steel is adjusted by inputting a ferro-alloy or a carbon material to the molten steel, and a temperature is adjusted by performing strong bubbling or generating arc in the LF refinement process. These processes are performed at an initial time and an intermediate time of the process.

At an end time of the LF refinement process, weak bubbling (or 'clean bubbling') is performed on the molten steel to float and separate inclusions mixed with the molten steel. A flow rate range of an argon gas used for the weak bubbling has a standard reference according to the kind of molten steel and a structural characteristic of LF refinement equipment, and a flow rate of the argon gas is precisely adjusted within the standard reference according to subjective judgment of a worker.

The gas injected to the molten steel is escaped from the molten steel through a molten steel surface of the molten steel. Here, slag covering the molten steel surface may be partially spaced apart from the molten steel surface by a gas. As the slag is spaced apart from the molten steel surface, the molten steel surface of the molten steel is exposed to the external air, and this portion is referred to as naked molten steel.

When bubbling of the gas is performed on the molten steel, the naked molten steel is inevitably generated in a certain degree in order to uniformly stir the entire molten steel.

When a refractory plug injecting an argon gas to the molten steel is damaged, and a crack is generated in the refractory plug, the argon gas may be leaked through the crack, and the leaked argon gas may be concentrated on a predetermined area of the molten steel surface to unnecessarily increase a size of the naked molten steel of the predetermined area. That is, the naked molten steel may increase in size more than necessary due to the leakage of the argon gas. Here, a large amount of external air is introduced to the molten steel through the naked molten steel. The large amount of external air introduced to the molten steel causes generation of external inclusions.

Also, when the refractory plug is clogged, a flow rate of the argon gas injected to the molten steel may decrease more than necessary, so that a size of the naked molten steel becomes less than a proper size. In this case, the inclusions are not floated and separated.

Thus, the naked molten steel having a proper size is required to be maintained in consideration of a state of the slag in order to minimize introduction of the external air while maximizing floating and separating of the inclusions. To this end, the flow rate of the argon gas is necessarily controlled in light of the state of the refractory plug.

Background technologies of the present invention are disclosed in patent documents below.

(Patent document 1) KR10-1779150 B1
(Patent document 2) KR10-2015-0050822 A

Further examples of refinement apparatuses using cameras for the calculation of naked steel surface at the surface of the melt are disclosed in KR20120073412, KR20010057957, CN108241384 and CN107608397.

## DISCLOSURE OF THE INVENTION

## TECHNICAL PROBLEM

The present disclosure provides a refinement apparatus and a refinement method, which are capable of exactly calculating a size of naked molten metal of molten steel surface and appropriately adjusting a gas flow rate based on the calculated size.

## TECHNICAL SOLUTION

In accordance with an exemplary embodiment, a refinement apparatus includes: a container unit having an open upper portion and an inner space in which a melt is refined; a nozzle unit installed on the container unit to blow a gas; a camera unit installed above the container unit to photograph a molten steel surface of the melt; and a control unit configured to calculate a size of naked molten steel on the molten steel surface by using a molten steel surface image obtained from the camera unit and installation information and performance information of the camera unit. wherein the installation information comprises an installation height and an installation angle of the camera unit and the performance information comprises a view angle and a resolution of the camera unit wherein the molten steel surface image is a single viewpoint molten steel surface image, wherein the control unit comprises:_a deriver configured to derive the installation height with respect to the molten steel surface;_a first calculator configured to calculate a pixel size of a photographed area of the camera unit by using an installation height, an installation angle, a view angle, and a resolution of the camera unit; _an analyzer configured to analyze the number of pixels of the naked molten steel area contained in the molten steel surface image;_a second calculator configured to calculate the size, which has a two-dimensional value, of the naked molten steel by multiplying the pixel size and the number of pixels; and_a flow rate controller configured to obtain a diameter of a circle having the same size as the size, which has a two-dimensional value, of the naked molten steel to determine the obtained diameter as a converted size having a one-dimensional value by using mathematical equation 4, and adjust a flow rate of a gas supplied to the nozzle unit according to the converted value,

Mathematical equation 4:

$$D_{eq} = sqrt(\text{the size of the naked molten steel} \times 4/\pi),$$

wherein sqrt represents square root, and $D_{eq}$ represents the converted size.

The refinement apparatus may further include a cover unit mounted to cover the open upper portion of the container unit, a through-hole may be defined at one side of the cover unit, and one camera unit may be disposed above the through-hole.

The refinement apparatus may further include an electrode bar mounted to pass through the cover unit, the electrode bar may be disposed at a central portion of the cover unit, the through-hole may be defined at an edge of the cover unit, and the camera unit may be installed in an inclined manner.

The camera unit may include: a camera configured to photograph the molten steel surface and generate a molten steel surface image; a housing configured to accommodate the camera; a purge path configured to inject a purge gas between the housing and the camera; and a cooling path configured to circulate a coolant inside the housing.

In accordance with another exemplary embodiment, a refinement method using a refinement apparatus includes: preparing a container unit in which a melt is accommodated; bubbling while blowing a gas to the melt; generating a molten steel surface image by photographing a molten steel surface of the melt using a camera, wherein the generating of the molten steel surface image generates a single viewpoint molten steel surface image by photographing the molten steel surface using one camera; calculating a size of naked molten steel on the molten steel surface by using the molten steel surface image and the installation information and the performance information of the camera, wherein the generating of the molten steel surface image generates a single viewpoint molten steel surface image by photographing the molten steel surface using one camera, wherein the calculating of the size of the naked molten steel comprises: deriving the installation height with respect to the molten steel surface; calculating a pixel size of a photographed area of the camera by using an installation height, an installation angle, a view angle, and the resolution of the camera ; analyzing the number of pixels of a naked molten steel area contained in the molten steel surface image; calculating the size, which has a two-dimensional value, of the naked molten steel by multiplying the pixel size and the number of pixels, and converting the size, which has a two-dimensional value, of the naked molten steel into a size, which has a one-dimensional value, of the naked molten steel, wherein the converting the size, which has a two-dimensional value, of the naked molten steel into a size, which has a one-dimensional value, of the naked molten steel comprises: converting a shape of the naked molten steel into a circular shape having the same size as the size of the naked molten steel and obtaining a diameter of the circular shape converted from the shape of the naked molten steel to obtain the converted size by using mathematical equation 4, wherein the refinement method further comprises adjusting a flow rate of a gas supplied to the nozzle unit according to the converted value after the converting of the size, which has a two-dimensional value, of the naked molten steel into the size, which has a one-dimensional value, of the naked molten steel,

Mathematical equation 4:

$$Deq = sqrt(\text{the size of the naked molten steel} \times 4/\pi),$$

wherein sqrt represents square root, and Deq represents the converted size.

The generating of the molten steel surface image may include photographing the molten steel surface using the camera in an inclined state by inclining the camera with respect to a vertical direction and generating a molten steel surface image.

The calculating of the pixel size may include: obtaining a first length in an inclined direction of the photographed area by using the installation height, the installation angle, and the view angle; obtaining a second length in a non-inclined direction of the photographed area by using the installation height and the view angle; obtaining a size of the photographed area by using the first length and the second length; obtaining the pixel size by using a size of the photographed area and the resolution.

The analyzing of the number of the pixels may include: binarizing the molten steel surface image into a bright portion and a dark portion and drawing a closed line at a boundary between the bright portion and the dark portion; and counting the number of pixels inside the closed line.

## C. BRIEF DESCRIPTION OF THE DRAWINGS

FIG. 1 is a first operation view of a refinement apparatus in accordance with an exemplary embodiment.
FIG. 2 is a second operation view of the refinement apparatus in accordance with an exemplary embodiment.
FIG. 3 is a third operation view of the refinement apparatus in accordance with an exemplary embodiment.
FIG. 4 is a partially enlarged view of the refinement apparatus in accordance with an exemplary embodiment.
FIG. 5 is a view for explaining a method for calculating a pixel size of a photographed area in accordance with an exemplary embodiment.
FIG. 6 is a view for explaining a process of analyzing the number of pixels of a naked molten steel area from a molten steel surface image in accordance with an exemplary embodiment.

## D. MODE FOR CARRYING OUT THE INVENTION

Hereinafter, embodiments of the present invention will be described in detail with reference to the accompanying drawings. The present invention may, however, be embodied in different forms and should not be construed as limited to the embodiments set forth herein. The scope of the invention is defined by the appended claims. In the figures, the dimensions of layers and regions are exaggerated for clarity of illustration. Like reference numerals refer to like elements throughout.

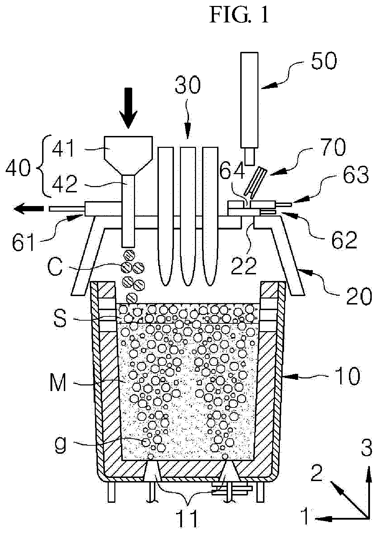

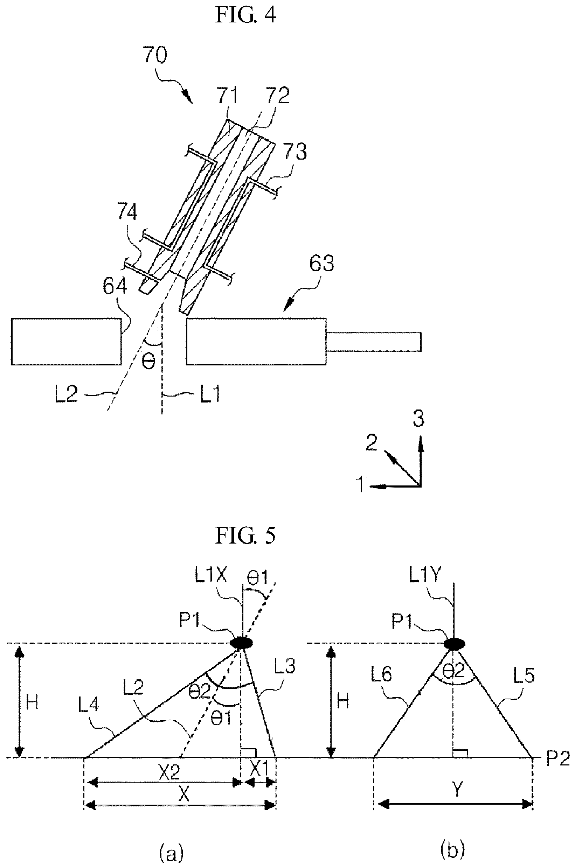

FIGS. 1, 2, and 3 are first, second, and third operation views, respectively, of a refinement apparatus in accordance with an exemplary embodiment. Also, FIG. 4 is a partially enlarged view of the refinement apparatus in accordance with an exemplary embodiment.

Hereinafter, the refinement apparatus in accordance with an exemplary embodiment will be described. Hereinafter, a LF refinement apparatus will be described as an example of the refinement apparatus. The refinement apparatus may be applied to various treatment apparatuses performing a treatment process of all sorts of objects to be treated.

Referring to FIGS. 1 to 3, the refinement apparatus in accordance with an exemplary embodiment includes: a container unit 10 having an open upper portion and an inner space for refining melt M; a nozzle unit 11 installed in the container unit 10 and capable of blowing a gas g; a camera unit 70 installed above the container unit 10 to photograph a molten metal surface of the melt M; and a control part (not shown) calculating a size of a naked molten metal of the molten metal surface by using a molten metal surface image obtained from the camera unit 70, installation information of the camera unit 70, and performance information of the camera unit 70.

Also, the refinement apparatus in accordance with an exemplary embodiment may further includes: a cover unit 20 mounted to cover the open upper portion of the container unit 10 and including a through-hole 22 at one side and an input hole 21 at the other side; an electrode bar 30 mounted to pass through the cover unit 20; gate parts 62 and 63, which are mounted to the cover unit 20 to cover the through-hole 22 and stacked with each other and each of which is movable in a horizontal direction; an input unit 40 installed above the input hole 21; an opening and closing part 61 disposed between the input hole 21 and the input unit 40 to horizontally move; and a sampling unit 50 disposed above the through-hole 22.

Also, in accordance with an exemplary embodiment, the camera unit 70 may be disposed above the through-hole 22, the gate part 62 and 63 may be disposed between the camera unit 70 and the through-hole 22, and the sampling unit 50 may be disposed above the camera unit 70. The electrode bar 30 may be disposed at a central portion of the cover unit 20. Also, each of the input unit 40, the sampling unit 50, and the camera unit 70 may be spaced apart from the electrode bar 40 and disposed at an edge of the cover unit 20 to avoid interference with the electrode bar 30. The control part may adjust a flow rate of the gas g supplied to the nozzle unit 11 by using a calculated size of the naked molten steel.

The container unit 10 may include a ladle. The ladle may have a bottom plate and a side wall. The bottom plate may extend in a horizontal direction and have a predetermined area. For example, the bottom plate may have a circular plate shape. The side wall may extend along a circumference of the bottom plate and protrude upward by a predetermined height. For example, the side wall may have a hollow cylindrical shape.

The container unit 10 may have an open upper portion and a space defined by the bottom plate and the side wall, in which the melt M is refined. The melt M may include molten steel produced in a converter refinement process. Also, the melt M may include various kinds of materials in addition to the molten steel. The melt M may be accommodated in the container unit 10.

The nozzle unit 11 may include a porous refractory plug (or referred to as a 'porous plug'). The nozzle unit 11 may blow the gas g to the melt M. One nozzle unit 11 or a plurality of nozzle units 11 may be provided. The nozzle unit 11 may pass through the bottom plate of the container unit 10.

The nozzle unit 11 may be connected to a gas pipe, and the gas pipe may be connected to a gas supply source (not shown). A control valve (not shown) may be mounted to the gas pipe to control the flow rate of the gas g flowing through the gas pipe. The control valve may have an opening degree that is controlled by the above-described control part (not shown).

The nozzle unit 11 may perform bubbling by relatively strongly blowing the gas g, e.g., an argon (Ar) gas, to the melt M. The melt M may be uniformly stirred by the strong bubbling of the gas g, and a temperature of the melt M may be reduced. Alternatively, the nozzle unit 11 may perform bubbling by relatively weakly blowing the gas g to the melt M. Inclusions in the melt M may be floated and separated by the weak bubbling of the gas g.

A layer of a slag S exists at the molten metal surface of the melt M. Here, the surface of the melt M may be exposed upward as the slag S is spaced apart from the molten metal surface by the gas g escaped through the molten metal surface during the bubbling of the gas g. That is, a naked molten metal N may be formed at the molten metal surface of the melt M during the bubbling of the gas g.

Here, the naked molten metal N is inevitably generated to smoothly stir the entire melt M. When a blown amount of the gas g is reduced not to generate the naked molten metal N, a congestion area of the melt M is generated inside the container unit 10.

A size of the naked molten metal N that is inevitably generated on the molten metal surface by a predetermined amount of gas g blown to the melt M in order to sufficiently stir the melt M when the nozzle unit 11 is normally operated is referred to as a reference size. When the size of the naked molten metal N is greater than the reference size, as external inclusions caused by external air introduced through the naked molten metal N increases, the inclusions in the melt M may increase. When the size of the naked molten metal N is less than the reference size, the melt M may not be sufficiently stirred, and the floating-separation of the inclusions may be slow down. The reference size may be varied according to the kind of the melt M, e.g., the kind of steel, a volume of the container unit 10, and a porosity of the nozzle unit 11.

The reference size may be theoretically determined by using properties of the slag S, the gas g, and the melt M or experimentally determined through a scaled model experiment of the LF refinement process. Alternatively, the reference size may be experientially derived from a result obtained by using a molten steel sampling record and size information of the naked molten steel obtained from a previously performed LF refinement process.

However, various methods for determining the reference size may be provided. The reference size may be preset to the control part. The reference size may be referred to as a normal size.

The gas g may include various gases in addition to the argon gas. For example, the gas g may include all sorts of inert gases for bubbling. Also, the gas g may include various gases for refining the melt M. Although the melt M and the slag S are scattered during the bubbling of the gas g, the melt M and the slag S may be blocked by the cover unit 20 from being discharged.

The cover unit 20 may be installed above the container unit 10. The cover unit 20 may be supported by a crane (not shown) or all sorts of elevation units (not shown). The cover unit 20 may be adjusted in height in a vertical direction by the crane or all sorts of elevation units. Here, the all sorts of elevation units may include a hydraulic cylinder or a pneumatic cylinder.

The cover unit 20 may have an open lower portion. The cover unit 20 may have an area capable of covering the open upper portion of the container unit 10. The cover unit 20 may be mounted to cover the open upper portion of the container unit 10. The cover unit 20 may include a cooling path (not shown). The cooling path may circulate a coolant (cooling water) therein. That is, the cover unit 20 may be a water cooling cover unit. The cooling path may be embedded in the cover unit 20 or connected to the cover unit 20. The cover unit 20 may have a truncated cone shape having an open lower portion. Alternatively, the cover unit 20 may have various shapes. Each of the through-hole 22 and the input hole 21 may be disposed at an edge of the cover unit 20.

The through-hole 22 and the input hole 21 may be formed at both sides of the edge of the cover unit 20, respectively, and spaced apart from each other in a horizontal direction. Here, the through-hole 22 may pass through one side of the edge of the cover unit 20 in the vertical direction. Also, the input hole 21 may pass through the other side of the edge of the cover unit 20 in the vertical direction.

Also, insertion holes for inserting the electrode bar 30 may be formed at a central portion of the cover unit 20. The electrode bar 30 may be mounted to pass through each of the insertion holes at the central portion of the cover unit 20 in the vertical direction. At least a lower portion of the electrode bar 30 may be disposed at a lower portion of the cover unit 20. The electrode bar 30 may be supported by a crane (not shown) or all sorts of elevation units (not shown). The electrode bar 30 may be adjusted in height by the crane or all sorts of elevation units. The electrode bar 30 may be spaced apart from the slag S and the melt M when ascended and immersed in the slag S and the melt M when descended. The electrode bar 30 may be provided in plurality, e.g., three.

The electrode bar 30 may be connected to a power supply unit (not shown) and receive, e.g., three phase current. The electrode bar 30 may generate arc. Here, the melt M may increase in temperature by heat caused by the arc. While the temperature of the melt M increases, a splash s' may be generated between the container unit 10 and the cover unit 20. Here, the splash s' may be minimized or prevented from being leaked to the outside by the cover unit 20. Also, the high-temperature heat caused by the arc may be also blocked by the cover unit 20 from being dissipated to the outside.

The input unit 40 may input a ferro-alloy or a carbon material to adjust a constituent of the melt M. The input unit 40 may be disposed above the input hole 21 to move in the vertical direction. The input unit 40 may include a hopper 41 in which an input material such as a ferro-alloy or a carbon material is accommodated and an input pipe 42 mounted to the hopper 41. The input pipe 42 may have a diameter that is insertable to the input hole 21. The input pipe 42 may have one end mounted to a lower portion of the hopper 41 and the other end extending toward the input hole 21 in the vertical direction. When an input material C is inputted to the melt M, the constituent of the melt M may be adjusted.

The opening and closing part 61 may be installed on the cover unit 20 to open and close the input hole 21. The opening and closing part 61 may be connected to a driving unit (not shown) such as a hydraulic cylinder, a pneumatic cylinder, or a linear motor. The opening and closing part 61 may move by the driving unit in a horizontal direction. This movement may allow the input hole 21 to be opened and closed.

The sampling unit 50 may be provided above the through-hole 22 to move in the vertical direction. The sampling unit 50 may pass through the through-hole 22 and be immersed into the melt M to collect a portion of the melt M when descended. The sampling unit 50 may include a probe capable of collecting the melt M. The constituent of the melt M may be analyzed from a sample of the melt M, which is collected by the sampling unit 50. The sampling unit 50 may further include a temperature measuring unit for measuring a temperature of the melt M. The temperature measuring unit may be disposed at a predetermined position of the probe. The sampling unit 50 may be supported by a driving unit (not shown) such as a hydraulic cylinder, a pneumatic cylinder, or a linear motor. The sampling unit 50 may be spaced upward from the camera unit 70 when ascended to avoid collision with the camera unit 70.

The gate parts 62 and 63 may include a lower gate part 62 and an upper gate part 73. Here. The lower gate part 62 may be installed at one side of the cover unit 20 to cover the through-hole 22. Also, the upper gate part 63 may be installed above the lower gate part 63. The lower gate part 62 and the upper gate part 63 may be connected to a driving unit (not shown) to move together or individually.

When the sampling unit 50 is descended, all of the lower gate part 62 and the upper gate part 63 may move in the horizontal direction to adjust opening and closing of the through-hole 22. Also, when the camera unit 70 is operated, only the lower gate part 62 may move to the outside of the through-hole 22, and the camera unit 70 may face the melt M through the opening 64 defined in the upper gate part 63. Here, the opening 64 may have an inner diameter less than that of the through-hole 22.

Hereinafter, a reason why the camera unit 70 and the control part are necessary for the refinement apparatus will be firstly described.

When the gas g is blown to the melt M to perform bubbling by using the nozzle unit 11, a crack may be generated in the nozzle unit 11 or the nozzle unit 11 may be clogged. Thus, the gas g may be excessively or insufficiently blown to the melt M.

The feature of excessively blowing the gas g to the melt M represents that, e.g., the flow rate of the gas g blown to an entire area of the melt M excessively increases, or the blowing of the gas g is biased to a predetermined area of the melt M, which is adjacent to a crack.

When the gas g is excessively blown to the melt M, the naked molten steel N greatly increases. Thus, since inclusions are generated as external air is introduced to the melt M through the naked molten steel N, an entire amount of inclusions may increase or a speed of removing the inclusions from the melt M may decrease.

When the gas g is insufficiently blown to the melt M, as the melt M is stirred weaker than expected, the inclusions are not sufficiently floated and separated. When the gas g is insufficiently blown to the melt M, the size of the naked molten steel N is less than the reference size.

Thus, it is necessarily checked that the size of the naked molten steel N maintains the reference size for uniform stirring of the melt M and reducing generation of the inclusions while the gas g is blown to the melt M. Also, when the size of the naked molten steel N is deviated from the reference size, the flow rate of the gas g supplied to the nozzle unit 11 is necessarily adjusted so that the size of the naked molten steel N is adjusted into the reference size.

As a variation of the size of the naked molten steel N is traced, it may be known whether a substantially blown amount of the gas g to the melt M is appropriate.

In accordance with an exemplary embodiment, a molten steel surface image of the melt M may be obtained by using the camera unit 70. Also, the size of the naked molten steel may be exactly calculated by using the control part (not shown), the flow rate of the gas g may be adjusted, and the size of the naked molten steel may be properly maintained.

Hereinafter, a reason why the camera unit 70 having a structure in accordance with an exemplary embodiment is provided to the refinement apparatus will be described. Also, the camera unit 70 and the control part (not shown) will be described.

For example, the size of the naked molten steel may be calculated by disposing the camera unit 70 at a position at which a central portion of the molten steel surface is shown in the vertical direction, photographing the molten steel surface image by using the camera unit 70, and analyzing the photographed molten steel surface image in order to exactly calculate the size of the naked molten steel from the molten steel surface image of the melt M.

However, the electrode bar 30 has to be disposed at the central portion of the molten steel surface for the refinement process of the melt M, e.g., the LF refinement process. Thus, a feature of photographing the molten steel surface at the position (a position directly above the central portion of the molten steel surface) at which the central portion of the molten steel surface is shown in the vertical direction by using the camera unit 70 is hardly performed

Alternatively, the size of the naked molten steel may be calculated by photographing various images of the molten steel surface at a plurality of positions at which an edge of the molten steel surface is shown downward with different viewpoints and using the photographed various images of the molten steel surface in order to exactly calculate the size of the naked molten steel from the molten steel surface image of the melt M.

However, each of the electrode bar 30, the opening and closing part 61, and the gate parts 62 and 63 are installed on the cover unit 20, and the input unit 40 and the sampling unit 50 are installed above the cover unit 20. That is, an installation position of the camera unit 70 is restricted to prevent interference between the camera unit 70 and each of the electrode bar 30, the opening and closing part 61, and the gate parts 62 and 63. As described above, an extra space for installing the camera unit 70 may not be provided in the cover unit 20 due to a structural characteristic of the cover unit 20. Thus, a plurality of camera units 70 may not be installed on the cover unit 20. Therefore, the feature of photographing the molten steel surface at a plurality of positions at which the edge of the molten steel surface is shown downward with different viewpoints is extremely difficult to be performed.

Also, when numbers of camera units 70 are installed on the cover unit 20, a frequency of the camera units 70 damaged by the splash s' and all sorts of scattering materials may increase according to the number of the camera units 70. Thus, when the plurality of camera units 70 are installed on the cover unit 20, burden of maintenance remarkably increases. Also, the camera unit 70 may have a shape that is similar to a thin pin or a round bar and a small diameter or size to reduce damage of the camera unit 70 under the above-described poor condition.

Thus, in accordance with an exemplary embodiment, one camera unit 70 may be installed inclined to an upper portion of the upper gate part 63 for easy installation and maintenance of the camera unit 70. Also, the camera unit 70 may have a round bar shape to minimize the camera unit 70 from being exposed to the melt M.

Hereinafter, the camera unit 70 in accordance with an exemplary embodiment will be described with reference to FIGS. 1 to 4.

The camera unit 70 may be installed above the container unit 10. Here, one camera unit 70 may be disposed above the through-hole 22. Here, the camera unit 70 may be installed such that a central axis L2, which will be described later, is inclined by a predetermined angle $\theta$ to a vertical axis L1. That is, the camera unit 70 may be installed diagonally to the molten steel surface and disposed above the edge of the molten steel surface instead of the central portion of the molten steel surface. The camera unit 70 may have a pin shape. The camera unit 70 may photograph the molten steel surface of the melt M and generate the molten steel surface image.

The camera unit 70 may be inclined to a first direction 1, e.g., an X-axis direction, and may not be inclined to a second direction 2, e.g., a Y-axis direction. A third direction 3 may be referred to as a z-axis direction or a vertical direction. Here, each of the first direction 1 and the second direction 2 may be parallel to the horizontal direction, and the third direction 3 may cross the horizontal direction.

The upper gate part 63 and the lower gate part 62 may be disposed between the camera unit 70 and the through-hole 22. The upper gate part 63 and the lower gate part 62 may be stacked with each other and each move in the horizontal direction.

As an area of the camera unit exposed to the melt M decreases, a risk to be damaged may decrease. Thus, the camera unit 70 may not be exposed to the melt M through the through-hole 22 but exposed to the melt M through the opening 64, which is smaller in size than the through-hole 22 and defined in one of the gate parts 62 and 63. The camera unit 70 may be disposed above the opening 64 and fixed to a top surface of the gate part in which the opening 64 is defined.

The through-hole 22 may have a predetermined size for the sampling unit 50 to pass therethrough, and this size is too large for the camera unit 70. Thus, as the opening 64 having a smaller size than the through-hole 22 is defined in the upper gate part 63, and the camera unit 70 is exposed to the molten steel surface through the opening 64, the area of the camera unit 70 exposed to the melt M at a high temperature may be significantly reduced.

Specifically, the opening 64 may pass through a central portion of the upper gate part 63 in the vertical direction. Also, the camera unit 70 may be installed above the opening 64. Also, the camera unit 70 may be fixed on the upper gate part 63 by a predetermined bracket (not shown).

When the lower gate part 62 moves in the horizontal direction to open the through-hole 22, the camera unit 70 may photograph the molten steel surface of the melt M. More specifically, the camera unit 70 may easily photograph the molten steel surface image of the melt M through the opening 64 defined in the upper gate part 63 and the through-hole 22 disposed below the opening 64.

When the photographing of the camera unit 70 is finished, the lower gate part 62 is returned to close a portion between the through-hole 22 and the opening 64. When the sampling unit 50 is descended, the camera unit 70, the upper gate part 63, and the lower gate part 62 may move together in the horizontal direction and be spaced apart from the through-hole 22.

The camera unit 70 may include a camera 72 generating the molten steel surface image, a housing 72 in which the camera 72 is accommodated, a purge path 74 blowing a purge gas between the housing 71 and the camera 72, and a cooling path 73 circulating a coolant in the housing 71. The camera 72 may have a pin shape, and the central axis L2 of the camera 72 may be inclined by a predetermined angle θ with respect to the vertical axis L1. That is, the camera 72 may be installed diagonally in an up-and-down direction (or the vertical direction). The housing 71 may have a hollow round bar shape, and the camera 72 may be inserted into the housing 71. The cooling path 73 may be connected to a coolant supply source (not shown) and receive a coolant, e.g., water.

The housing 71 may have a lower end having a ring shape protruding downward from the camera 72. When a purge gas is blown into a space between the camera 72 and the lower end of the housing 71, the camera 72 may be protected from the splash s' and all sorts of scattering materials.

To this end, the purge path 74 may pass through the protruding portion. Also, an end (outlet) of the purge path 74 may be positioned at an inner circumference of the protruding portion. The purge path 74 may be connected to a purge gas supply source (not shown) and receive a purge gas. The purge gas may be at least one kind of gas selected from an argon gas, a nitrogen gas, and air.

The molten steel surface image is a molten steel surface image with a single viewpoint. That is, the camera 72 may photograph the molten steel surface to generate a single viewpoint molten steel surface image. Here, the single point represents one viewpoint. The single viewpoint image represents an image photographed at one position with one viewpoint. As a concept opposite to the single viewpoint image, there is a stereo image or a multi-viewpoint image.

The molten steel surface image may be referred to as a one-channel single viewpoint molten steel surface image in consideration that the molten steel surface image is photographed by one camera 72.

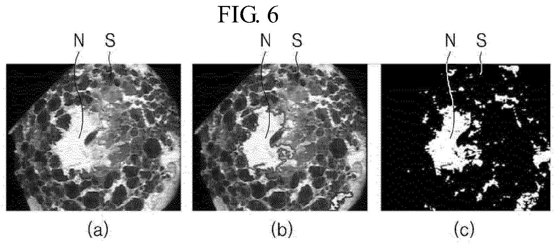

(a) and (b) of FIG. 5 are views for explaining a method for calculating a pixel size of a photographing area in accordance with an exemplary embodiment. The photographing area represent a photographing area of the camera 72. FIG. 6 is a view for explaining a method for analyzing the number of pixels of a naked molten steel area from the molten steel surface image in accordance with an exemplary embodiment.

Hereinafter, the control unit in accordance with an exemplary embodiment will be described with reference to FIGS. 1 to 6.

The control unit (not shown) calculates the size of the naked molten steel by using the molten steel surface image obtained from the camera unit 70, installation information of the camera unit 70, and performance information of the camera unit 70 and adjust the flow rate of the gas g supplied to the nozzle unit 11 by using the calculated size of the naked molten steel.

The installation information of the camera unit 70 will be simply referred to camera installation information or installation information. Specifically, the installation information includes an installation height and an installation angle of the camera 72. The performance information of the camera unit 70 will be simply referred to camera performance information or performance information. The performance information includes a view angle and a resolution of the camera 72. The installation height of the camera 72 will be simply referred to as an installation height, and the installation angle of the camera 72 will be simply referred to as an installation angle. Also, the view angle of the camera 72 will be simply referred to as a view angle, and the resolution of the camera 72 will be simply referred to as a resolution.

The installation angle may be measured from an installation structure of the camera 72, and the view angle and the resolution may be checked from a data sheet provided from a distribution company or a manufacturing company of the camera 72. The installation angle, the view angle, and the resolution may be preset to the control unit.

The view angle is an angle representing a range of a subject photographed by the camera 72 by using an optical system such as a lens as a reference point. The resolution represents the number of pixels constituting the photographed image. The pixel represents a pixel of a minimum unit, which constitutes the photographed image.

The control unit may exactly calculate the size of the naked molten steel with only one molten steel surface image at a single viewpoint, which is photographed from the camera unit 70, by using the preset installation information and the preset performance information. That is, in accordance with an exemplary embodiment, the size of the naked molten steel may be exactly calculated from one molten steel surface image at a single viewpoint instead of using an image with a multi-viewpoints or a plurality of images with a single viewpoint. That is, the exact size of the naked molten steel N may be calculated by the control unit with only one camera unit 70. Here, the size of the naked molten steel N represents an area of the naked molten steel N.

Hereinafter, a constitution and an operation method of the control unit will be described. The control unit may include a deriver a first calculator, an analyzer, a second calculator, and a flow rate controller. Hereinafter, suggested numerical values are merely an example for explaining an exemplary embodiment, and the exemplary embodiment is not limited to the suggested numerical values.

The control unit has to analyze the number of pixels of an area of the naked molten steel and calculate the size of the naked molten steel N according to the number of pixels in order to exactly calculate the size of the naked molten steel from the molten steel surface image. Here, the size of the pixel of the photographed area is necessary to calculate the size of the naked molten steel according to the number of pixels. Also, the installation height with respect to the molten steel surface of the melt M is necessary to calculate the size of the pixel of the photographed area.

The derived derives the installation height with respect to the molten steel surface of the melt M. More specifically, the deriver may calculate or measure the installation height with respect to the molten steel surface of the melt M by using an installation position of the camera unit 70 and an amount of the melt in the container unit 10. Specifically, the installation position of the camera unit 70 is an installation position of the camera 72, and the amount of the melt is a weight of the melt. Hereinafter, a method for calculating the installation height with respect to the molten steel surface of the melt M will be described.

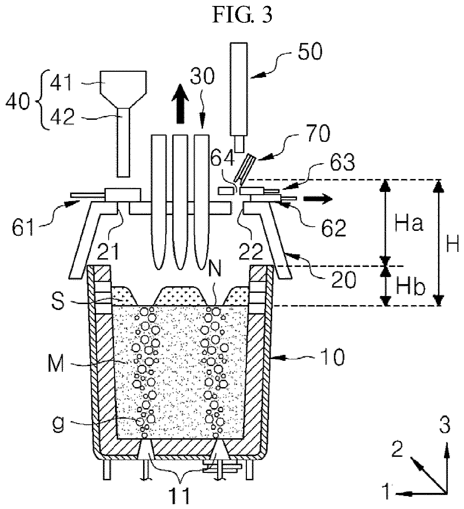

Referring to FIG 3, an installation height H with respect to the molten steel surface includes a first height Ha from an upper end of the container unit 10 to the camera 72 and a second height Hb from the upper end of the container unit 10 to the molten steel surface. The first height Ha may be calculated or measured from the shape and the installation structure of each of the container unit 10 and the cover unit 20 and the installation position of the camera unit 70. The first height Ha may be preset to the deriver.

The second height Hb may be calculated by using the amount of the melt in the container unit 10, the weight of the melt M and the height of the molten steel surface information, which are known in advance, and a proportional equation.

The weight of the melt M and the height of the molten steel surface information, which are known in advance, are stated in table 1 below.

[Table 1]

| | Weight (w) of melt | Height (Hb) of molten steel surface |
|---|---|---|
| 1 | 345 ton | 400 mm |
| 2 | 250 ton | 1000 mm |

Here, the weight of the melt and the height of the molten steel surface are inversely proportional to each other. This is because the height of the molten steel surface decreases as the weight of the melt decreases, and the molten steel surface is spaced apart from the upper end of the container unit 10.

The preset weight of the melt M and the preset height of the molten steel surface information may be obtained from, e.g., results of a scaled model experiment or obtained by substantially measuring the height of the molten steel surface of the melt M through performing previous refinement processes of the melt M several times. Theses values may be preset to the deriver.

The proportional equation is stated in mathematical equation 1 below.

(Mathematical equation 1)

$$Hbt = [(Hb2 - Hb1) \div (w1 - w2)] \times (w1 - wt) + Hb1$$

Here, w1 is a first value of the preset weight of the melt, w2 is a second value of the preset weight of the melt, Hb1 is a first value of the preset height of the molten steel surface, and Hb2 is a second value of the preset height of the molten steel surface. Also, wt represents the weight of the melt M accommodated in the container unit 10. Also, Hbt is a second height value with respect to the melt M accommodated in the container unit 10.

For example, when the weight of the melt M accommodated in the container unit 10 is 320 ton in a current process, the second height Hb is 558 mm according to the mathematical equation 1 (round off below the decimal point).

When the first height Ha is 1,434 mm, the height H with respect to the molten steel surface may be calculated to be 1,992 mm.

Here, the above numerical values are merely an example for explaining the deriver.

Also, the second height Hb may be obtained by using a volume of the melt M and a shape and a size of an inner space of the container unit 10.

When the deriver measures the installation height with respect to the molten steel surface of the melt M, the deriver may include a physical unit. For example, the deriver may include an infrared distance measuring unit. In this case, the infrared distance measuring unit may be attached to, e.g., the sampling unit 70 to measure a distance between the camera unit 70 and the molten steel surface of the melt M.

Referring to FIG. 5, the first calculator calculates the size of the pixel of the photographed area of the camera 72 by using the installation height H, the installation angle, the view angle, and the resolution. Here, mathematical equation 2 and mathematical equation 3 may be used. Here, the above installation angle represents an inclination of the central axis L2 of the camera 72 with respect to the vertical direction.

Here, since the first calculator calculates the size of the pixel by using all of the installation height, the installation angle, the view angle, and the resolution, the size of the pixel of the photographed area of the camera 72 may be exactly calculated in light of a structure in which the camera 72 is installed inclined to the edge of the cover unit 20. For example, the first calculator may exactly calculate the size of the pixel of the photographed area in light of the installation angle of the camera 72 based on the installation information and observation range of the camera 72.

The method for calculating the size of the pixel of the photographed area in the first calculator when the resolution is 640 × 480 pixels, the installation angle θ1 is 15°, the view angle θ1 is 55°, and the camera unit 70 is inclined with respect to a horizontal side among horizontal and vertical sides of the photographed area of the camera unit 70 will be described in detail. Hereinafter, the photographed area of the camera unit 70 will be simply referred to as a photographed area for convenience of description. Here, the vertical side of the photographed area may be a side extending in the X-axis direction, and the horizontal side of the photographed area may be a side extending in the Y-axis direction.

(Mathematical equation 2)

$$\text{(Mathematical equation 2-1) } X1 = \tan((0.5 \times \theta2) - \theta1) \times H$$

$$\text{(Mathematical equation 2-2) } X2 = \tan((0.5 \times \theta2) + \theta1) \times H$$

$$\text{(Mathematical equation 2-3) } X = X1 + X2$$

$$\text{(Mathematical equation 2-4) } Y = 2 \times \tan(0.5 \times \theta2) \times H$$

Here, θ1 is the installation angle, and θ2 is the view angle. H is the installation height with respect to the molten steel surface.

Firstly, a length of a horizontal side X of the photographed area is obtained. The horizontal side X of the photographed area is a side in a direction in which the camera unit 70 is inclined. The horizontal side X of the photographed area is divided into a first segment X1 and a second segment X2 for easy calculation. The first segment X1 is obtained by connecting a foot of a first perpendicular line L1X, which is drawn to the horizontal side X of the photographed area from a point P1 at which the camera unit 70 is installed, to one end of the horizontal side X. Also, the second segment is obtained by connecting the foot of the first perpendicular line L1X to the other end of the horizontal side X of the photographed area. L2 represents the central axis of the camera unit 70. P2 represents a point at which the photographed area is disposed, i.e., a molten steel surface level.

A length of the first segment X1 may be calculated by using the mathematical equation 2-1. An angle between the first hypotenuse L3 and the first perpendicular line L1X may be obtained, and the length of the first segment X1 may be calculated by using the tangent theorem as in the mathematical equation 2-1. Here, the first hypotenuse L3 is a segment connecting the point P1 at which the camera unit 70 is installed to one end of the horizontal side X of the photographed area.

A length of the second segment X2 may be calculated by using the mathematical equation 2-2. An angle between the second hypotenuse L4 and the first perpendicular line L1X may be obtained, and the length of the second segment X2 may be calculated by using the tangent theorem as in the mathematical equation 2-2. Here, the second hypotenuse L4 is a segment connecting the point P1 at which the camera unit 70 is installed to the other end of the horizontal side X of the photographed area.

The length of the horizontal side X of the photographed area is calculated by adding the first segment X1 with the second segment X2 using the mathematical equation 2-3. A value of 2,267 mm is obtained by calculating the length of the horizontal side X of the photographed area when the weight of the melt M is 320 ton, the installation height H is 1,992 mm, the resolution is 640 X 480 pixels, the installation angel θ1 is 15°, and the view angle θ1 is 55°. Here, values below the decimal point are rounded off when calculated.

A length of the vertical side Y of the photographed area is obtained. The length of the vertical side Y of the photographed area is obtained by using the mathematical equation 2-4. Since the vertical side Y of the photographed area is a side in a direction in which the camera unit 70 is not inclined, a second perpendicular line L1Y drawn to the vertical side Y of the photographed area from the point P1 at which the camera unit 70 is installed forms a right angle with the vertical side Y of the photographed area. Thus, the length of the vertical side Y of the photographed area may be calculated as in the mathematical equation 2-4 by obtaining an angle between a third hypotenuse L5 and the second perpendicular line L1Y or an angle between a fourth hypotenuse L6 and the second perpendicular line L1Y and using the tangent theorem.

The third hypotenuse L5 is a segment connecting the point P1 at which the camera unit 70 is installed and one end of the vertical side Y of the photographed area, and the fourth hypotenuse L6 is a segment connecting the point P1 at which the camera unit 70 is installed and the other end of the vertical side Y of the photographed area. The third hypotenuse L5 and the fourth hypotenuse L6 may be symmetric with respect to the second perpendicular line L1Y.

A value of 2,074mm is obtained by calculating the length of the horizontal side X of the photographed area when the weight of the melt M is 320 ton, the installation height H is 1,992 mm, the resolution is 640 X 480 pixels, the installation angel θ1 is 15°, and the view angle θ1 is 55°. Here, values below the decimal point are rounded off when calculated.

That is, the camera unit 70 may generate the molten steel surface image by photographing the photographed area corresponding to a size of 2,267 mm in a direction inclined on a predetermined plane having the same height as the molten steel surface of the melt M, e.g., the X-axis direction, and a size of 2,074 mm in a non-inclined direction, e.g., the Y-axis direction.

(Mathematical equation 3)

$$\text{(Mathematical equation 3-1) } dX = X \div \text{horizontal resolution}$$

$$\text{(Mathematical equation 3-2) } dY = Y \div \text{vertical resolution}$$

$$\text{(Mathematical equation 3-3) } dA = dX \times dY$$

Here, the horizontal resolution is 640 pixels, and the vertical resolution is 480 pixels. X is the length of the horizontal side of the photographed area, and a value of X is 2,267 mm. Also, Y is the length of the vertical side of the photographed area, and a value of X is 2,074 mm. The above values are merely an example for specifically explaining a method for calculating a pixel size of the photographed area in the first calculator. Here, the pixel size is a size of one pixel.

Thereafter, a pixel length dX of the horizontal side of the photographed area is obtained. The pixel length dX of the horizontal side of the photographed area is calculated to be 3.54 mm by using the mathematical equation 3-1. Then, a pixel length dY of the vertical side of the photographed area is obtained. The pixel length dY of the vertical side of the photographed area is calculated to be 4.32mm by using the mathematical equation 3-2. Here, values are rounded to two decimal places when calculated.

Thereafter, a pixel size dA of the photographed area is calculated by using the pixel length dX of the horizontal side of the photographed area and the pixel length dY of the vertical side of the photographed area. Here, the pixel size dA of the photographed area is calculated to be 15.2928 $mm^2$ by multiplying the pixel length dX of the horizontal side of the photographed area and the pixel length dY of the vertical side of the photographed area based on the mathematical equation 3-3.

As described above, the first calculator may calculate the length of the horizontal side and the length of the vertical side of the photographed area when the installation angle, the view angle, and the installation height are known, and calculate the pixel size of the photographed area by using the resolution after the length of the horizontal side and the length of the vertical side of the photographed area are calculated.

Also, a horizontal resolution and a vertical resolution of the camera 72 may be exchanged at any time. For example, the horizontal resolution and the vertical resolution of the camera 72 may be exchanged because the camera 72 is not always fixed at the same angle with respect to the central axis of the camera 72 when the camera 72 is installed in the housing 71. As described above, although the horizontal resolution and the vertical resolution of the camera 72 are exchanged from each another, the pixel size dA of the photographed area may be obtained in the same manner.

For example, when the horizontal resolution is 480 pixels and the vertical resolution is 640 pixels, the pixel size dA of the photographed area may be calculated by obtaining the pixel length of the horizontal side of the photographed area and the pixel length of the vertical side of the photographed area, and a result thereof may be calculated to be 15.2928 mm$^2$ in the same manner. That is, the pixel size dA of the photographed area may be obtained in the same manner through the above series of calculations.

FIG. 6 is a view for explaining a process of analyzing the number of pixels of the naked molten steel from the molten steel surface image in accordance with an exemplary embodiment. (a) of FIG. 6 is a photograph showing the photographed molten steel surface image, (b) of FIG. 6 is a photograph showing the molten steel surface image in which the naked molten steel area is indicated, and (c) of FIG. 6 is a photograph showing the molten steel surface image that is binarized.

Referring to FIG. 6, the analyzer may analyze the number of the pixels of the naked molten steel area contained in the molten steel surface image. Specifically, the analyzer may analyze the number of the pixels of the naked molten steel area through brightness according to the resolution of the molten steel surface image. The analyzer receives the photographed molten steel surface image. Here, each of the naked molten steel N and the slag S form a predetermined area on the molten steel surface image. The analyzer distinguishes the naked molten steel area from the slag area by using preset reference brightness. The analyzer binarizes the molten steel surface image and distinguishes pixels, which are brighter than the reference brightness among the pixels of the molten steel surface image, as the pixels of the naked molten steel area and pixels, which are darker than the reference brightness, as the pixels of the slag area. The analyzer may draw a closed line at a boundary between the pixels of the naked molten steel area and the pixels of the slag area and count the number of the pixels inside the closed line to derive the counted number of the pixels as the number of the pixels of the naked molten steel area. Here, when the closed line is provided in plurality, the number of pixels may be derived for each closed line, and then the biggest value may be selected as the number of the pixels of the naked molten steel.

The reference brightness may include all sorts of brightness as long as the brightness may distinguish the naked molten steel from the slag in the molten steel surface image.

The second calculator calculates the size of the naked molten steel by using the number of the pixels of the naked molten steel area and the calculated pixel size of the photographed area. For example, the second calculator calculates the size of the naked molten steel by multiplying the number of pixels, which is derived from the analyzer, and the pixel size calculated from the first calculator.

The flow rate controller adjusts the flow rate of the gas g supplied to the nozzle unit 11 according to the size of the naked molten steel calculated from the second calculator. That is, the flow rate controller may compare the size of the naked molten steel with the preset reference size and adjust the flow rate of the gas g supplied to the nozzle unit 11 according to the comparison result. The flow rate controller increases the flow rate of the gas g when the calculated size of the naked molten steel is less than the reference size and decreases the flow rate of the gas g when the calculated size of the naked molten steel is greater than the reference size. By using the above control, the size of the naked molten steel may follow the reference size. The above control of the flow rate controller may be referred to as, e.g., control using the area of the naked molten steel N.

However, the flow rate controller may obtain a converted size by converting the size of the naked molten steel and compare the converted size with a preset reference converted size to adjust the flow rate of the gas g supplied to the nozzle unit 11 according to the comparison result.

(Mathematical equation 4)

$$D_{eq} = sqrt(\text{the size of the naked molten steel} \times 4/\pi)$$

Here, sqrt represents a square root, and $D_{eq}$ represents a converted size. The converted size $D_{eq}$ may be a value of a length dimension. Also, the size of the naked molten steel may be a value of an area dimension.

The converted size $D_{eq}$ is obtained such that a circle having the same size (area) as the size (area) of the naked molten steel is assumed, and a diameter of the circle is obtained and determined as the converted size $D_{eq}$. The flow rate controller obtains the converted size $D_{eq}$ by using the mathematical equation 4. That is, the dimension may be lowered by converting the size of the naked molten steel having a two dimensional value into the converted size having an one dimensional value.

Also, the flow rate controller adjusts the flow rate of the gas g supplied to the nozzle unit 11 according to the converted size $D_{eq}$. That is, the flow rate controller may compare the converted size $D_{eq}$ with the preset reference converted size and adjust the flow rate of the gas g supplied to the nozzle unit 11 according to the comparison result.

The flow rate controller increases the flow rate of the gas g when the converted size $D_{eq}$ is less than the reference converted size and decreases the flow rate of the gas g when the converted size $D_{eq}$ is greater than the reference size. This control may allow the converted size $D_{eq}$ of the naked molten steel to follow the reference converted size. The above control of the flow rate controller may be referred to as control using the converted size $D_{eq}$.

The naked molten steel formed on the molten steel surface may have an irregular shape as illustrated in FIG. 6 instead of having a regular shape such as a rectangular shape or a circular shape. Since the reference size is difficult to reflect the substantial shape of the molten steel surface, the reference size may be easily determined by assuming that the shape of the molten steel surface has a circular shape. Here, the reference converted size is a diameter of the molten steel surface shape that is assumed as the circular shape having the same area as the reference size. Thus, the flow rate controller may further easily control by using the converted size.

Hereinafter, the refinement method in accordance with an exemplary embodiment will be described in detail. The refinement method in accordance with an exemplary embodiment may be applied to the LF refinement process. That is, the refinement method may be the LF refinement method.

The refinement method in accordance with an exemplary embodiment includes: a process of preparing the container unit 10 in which the melt M is stored; a process of bubbling while blowing the gas g to the melt M; a process of generating the molten steel surface image by photographing the molten steel surface of the melt M using the camera 72; and a process of calculating the size of the naked molten steel on the molten steel surface by using the molten steel surface image and the installation information and the performance information of the camera 72.

Also, the refinement method in accordance with an exemplary embodiment may further include a process of generating arc above the melt M by using the electrode bar 30 between the process of preparing the container unit 10 and the process of bubbling. Also, a process of adjusting the constituent of the melt M by inputting an input material to the melt M between the process of generating arc and the process of bubbling. All of the process of adjusting the constituent, the process of generating the arc, and the process of bubbling may be referred to as the LF refinement process.

Also, the refinement method in accordance with an exemplary embodiment further includes a process of adjusting the gas flow rate by using the size of the naked molten steel after the process of calculating the size of the naked molten steel.

The installation information includes the installation height and the installation angle of the camera, and the performance information includes the view angle and the resolution of the camera. The process of generating the molten steel surface image generates the single viewpoint molten steel surface image by photographing the molten steel surface using one camera 72. Firstly, the container unit 10 in which the melt M is accommodated is prepared. For example, the melt M may be prepared to perform the LF refinement process. That is, molten steel produced from a converter refinement process is outputted to the container unit 10. Thereafter, the container unit 10 is transferred to be disposed below the cover unit 20. Then, the cover unit 20 is mounted to the open upper portion of the container unit 10 by descending the cover unit 30.

Thereafter, the input unit 40 is descended, the input hole 21 is opened, and the input material accommodated in the input unit 40 is inputted to the melt M through the input hole 21. Thus, a composition of the constituent of the melt M may be adjusted. Here, the strong bubbling of the gas g is performed on the melt M by using the nozzle unit 11 (refer to FIG. 1). Here, the through-hole 22 is in a closed state by the upper gate part 63 and the lower gate part 62. When the composition of the constituent of the melt M is adjusted, the strong bubbling of the gas g is finished, and the input hole 21 is closed.

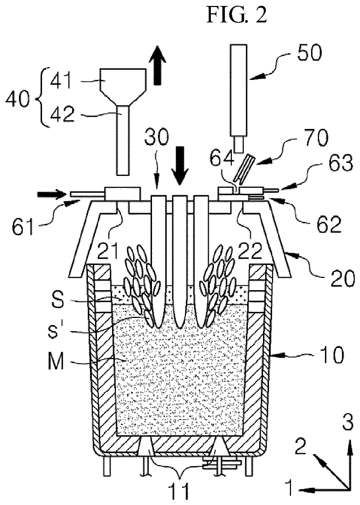

Thereafter, the slag S is immersed by descending the electrode bar 30, and the arc is generated above the melt M by using the electrode bar 30. Through this process, a temperature of the melt M increases (refer to FIG. 2). When the temperature of the melt M completely increases, the electrode bar 30 is ascended.

Thereafter, the lower gate part 62 is horizontally moved to the outside of the through-hole 22, and the molten steel surface is exposed to the camera 72 through the opening 64 defined in the upper gate part 63. Thereafter, while the gas g is blown to the melt M by using the nozzle unit 11, and weak bubbling is performed (refer to FIG. 3). At the same time, the camera 72 photographs the molten steel surface of the melt to generate the molten steel surface image. Further specifically, the molten steel surface may be photographed by the camera 72 in an inclined state by inclining the camera 72 by a predetermined angle in the vertical direction to generate the molten steel surface image. That is, the molten steel surface may be photographed by the camera 72 installed diagonally with respect to the molten steel surface to generate the molten steel surface image.

During the process of photographing the molten steel surface by the camera 72 and generating the molten steel surface image, a coolant is circulated inside the housing in which the camera is accommodated, and a purge gas is injected between the housing 71 and the camera 72. Thus, the camera 72 may be protected from high-temperature heat and scattering materials while the camera 72 photographs the molten steel surface.

Thereafter, while the weak bubbling process continues, the size of the naked molten steel on the molten steel surface is calculated by using the installation information and the performance information of the camera.

That is, the installation height with respect to the molten steel surface is derived by using the deriver of the control unit, and the first calculator of the control unit calculates the pixel size of the photographed area by using the installation height, the installation angle, the view angle, and the resolution. Thereafter, the number of the pixels of the naked molten steel area contained in the molten steel surface image is analyzed by using the analyzer of the control unit. Thereafter, the first calculator of the control unit calculates the size of the naked molten steel by using the number of pixels and the pixel size. Since a process of deriving the installation height with respect to the molten steel surface, a process of calculating the pixel size, a process of analyzing the number of pixels, and a process of calculating the size of the naked molten steel are described in detail while the control unit of the refinement apparatus is described, hereinafter, the above processes are simply described.

Firstly, the process of deriving the installation height is described below. The first height Ha from the camera 72 to the upper end of the container unit 10 is obtained by using the installation position of the camera 72. Also, the second height Hb from the upper end of the container unit 10 to the molten steel surface is obtained by using the amount of the melt in the container unit 10. Thereafter, the installation height H may be calculated by adding the first height and the second height.

Here, a process of obtaining the second height Hb is described below. As a proportional relationship between the amount of the melt and the height of the molten steel surface is established like the mathematical equation 1 by using information of the amount of the melt and the height of the molten steel surface, and the height of the molten steel surface with respect to the amount of the melt in the container unit is estimated, the estimated height is regarded as the second height.

The process of calculating the pixel size is described below. A first length in an inclined direction of the photographed area, e.g., the length of the horizontal side X of the photographed area, is obtained by using the installation height H, the installation angle $\theta1$, and the view angle $\theta2$, and a second length in a non-inclined direction of the photographed area, e.g., the length of the vertical side Y of the photographed area, is obtained by using the installation height and the view angle. Thereafter, a size A of the photographed area is obtained by using the first length and the second length. Thereafter, the pixel size dA is obtained by using the size and the resolution of the photographed area. The above mathematical equation 2 and mathematical equation 3 are used in this process.

The process of analyzing the number of pixels is described below. The molten steel surface image is binarized into a bright portion and a dark portion, and a closed line is drawn at a boundary between the bright portion and the dark portion. Thereafter, the number of pixels may be derived by counting the number of the pixels inside the closed line. Here, when the closed line is provided in plurality, the number of pixels may be counted for each closed line, and then the biggest value may be selected to derive the number of pixels.

The process of calculating the size of the naked molten steel is described below. The size of the naked molten steel is calculated by multiplying the number of pixels and the pixel size. Thereafter, the shape of the naked molten steel may be converted to a circular shape having the same area as the naked molten steel, and a diameter of the circular shape, which is converted from the shape of the naked molten steel, may be obtained to obtain the converted size of the naked molten steel.

Thereafter, the gas flow rate is adjusted according to the size of the naked molten steel by using the flow rate controller of the control unit. That is, the flow rate controller compares the size of the naked molten steel with the preset reference size to maintain the gas flow rate when the size of the naked molten steel falls within the reference size. Also, the flow rate controller increases the gas flow rate supplied to the nozzle unit 11 when the size of the naked molten steel is less than the reference size. Also, the flow rate controller decreases the gas flow rate supplied to the nozzle unit 11 when the size of the naked molten steel is greater than the reference size.

Also, the flow rate controller may adjust the gas flow rate by using the converted size of the naked molten steel. Here, the above converted size of the naked molten steel has a value of a diameter, i.e., a length dimension (one dimension). However, the size of the naked molten steel has a value of an area, i.e., an area dimension (two dimension). Since the control using the converted size of the naked molten steel may be intuitively monitored, the process may be easily performed.

Since a process of controlling the gas flow rate using the converted size by the flow rate controller is described in detail while the control unit of the refinement apparatus is described, a description thereof will be omitted.

Since inclusions are floated and separated from the molten steel surface of the melt M and collected to the slag S in a process of slightly blowing the gas g to the melt M and performing weak bubbling, the naked molten steel is inevitably generated. Here, as the flow rate controller compares the size of the naked molten steel calculated from the second calculator with the preset reference size to adjust the gas flow rate to the nozzle unit 11 according to the result as described above, the size of the naked molten steel N may be maintained within the reference size during the weak bubbling. Thus, while stirring of the melt M is maximized, generation of external inclusions may be minimized or restricted.

When the weak bubbling of the gas g is finished, the supply of the gas g to the nozzle unit 11 is stopped, and the container unit 10 is transferred to a following process after the cover unit 20 is ascended. The following process may be, e.g., a vacuum degassing process or a continuous casting process.

In accordance with the exemplary embodiment, the control unit may quantify the size of the naked molten steel, and the gas supply may be controlled so that the size of the naked molten steel follows the reference size. Thus, the gas flow rate may be dynamically controlled to improve the refinement process, e.g., the LF refinement process, to have an optimized quality.

Although the apparatus and method have been described with reference to the specific embodiments, they are not limited thereto. The invention may, however, be embodied in many different forms and should not be construed as being limited to the embodiments set forth herein, rather, these embodiments are provided so that this disclosure will be thorough and complete, and will fully convey the concept of the invention to those skilled in the art. Therefore, it will be readily understood by those skilled in the art that various modifications and changes can be made thereto without departing from the scope of the present invention defined by the appended claims.

**Claims**

1. A refinement apparatus comprising:

    a container unit (10) having an open upper portion and an inner space in which a melt (M) is refined;
    a nozzle unit (11) installed on the container unit (10) to blow a gas (g);
    a camera unit (70) installed above the container unit (10) to photograph a molten steel surface of the melt (M); and
    a control unit configured to calculate a size of naked molten steel (N) on the molten steel surface by using a molten steel surface image obtained from the camera unit (70) and installation information and performance information of the camera unit (70),
    wherein the installation information comprises an installation height and an installation angle of the camera unit, and
    the performance information comprises a view angle and a resolution of the camera unit,
    wherein the molten steel surface image is a single viewpoint molten steel surface image,
    wherein the control unit comprises:

        a deriver configured to derive the installation height with respect to the molten steel surface;
        a first calculator configured to calculate a pixel size of a photographed area of the camera unit (70) by using an installation height, an installation angle, a view angle, and a resolution of the camera unit (70);
        an analyzer configured to analyze the number of pixels of the naked molten steel area contained in the molten steel surface image;
        a second calculator configured to calculate the size, which has a two-dimensional value, of the naked molten steel (N) by multiplying the pixel size and the number of pixels; and
        a flow rate controller configured to obtain a diameter of a circle having the same size as the size, which has a two-dimensional value, of the naked molten steel (N) to determine the obtained diameter as a converted size ($D_{eq}$) having a one-dimensional value by using mathematical equation 4, and adjust a flow rate of a gas (g) supplied to the nozzle unit (11) according to the converted value ($D_{eq}$),

    Mathematical equation 4:

    $$D_{eq} = sqrt(\text{the size of the naked molten steel} \times 4/\pi),$$

        wherein sqrt represents square root, and $D_{eq}$ represents the converted size.

2. The refinement apparatus of claim 1, further comprising a cover unit (20) mounted to cover the open upper portion of the container unit (10),

    wherein a through-hole (22) is defined at one side of the cover unit (20), and
    one camera unit (70) is disposed above the through-hole (22).

3. The refinement apparatus of claim 2, further comprising an electrode bar (30) mounted to pass through the cover unit (20),

    wherein the electrode bar (30) is disposed at a central portion of the cover unit (20), and the through-hole (22) is defined at an edge of the cover unit (20), and
    the camera unit (70) is installed in an inclined manner.

4. The refinement apparatus of claim 1, wherein the camera unit (70) comprises:

   a camera (72) configured to photograph the molten steel surface and generate a molten steel surface image;
   a housing (71) configured to accommodate the camera (72);
   a purge path (74) configured to inject a purge gas between the housing (71) and the camera (72); and
   a cooling path (73) configured to circulate a coolant inside the housing (71).

5. A refinement method using a refinement apparatus according to any of claims 1-4, the refinement method comprising:

   preparing a container unit (10) in which a melt (M) is accommodated;
   bubbling while blowing a gas (g) to the melt (M);
   generating a molten steel surface image by photographing a molten steel surface of the melt using a camera (72), wherein the generating of the molten steel surface image generates a single viewpoint molten steel surface image by photographing the molten steel surface using one camera;
   calculating a size of naked molten steel (N) on the molten steel surface by using the molten steel surface image and the installation information and the performance information of the camera (72),
   wherein the generating of the molten steel surface image generates a single viewpoint molten steel surface image by photographing the molten steel surface using one camera,
   wherein the calculating of the size of the naked molten steel (N) comprises:

      deriving the installation height with respect to the molten steel surface;
      calculating a pixel size of a photographed area of the camera (72) by using an installation height, an installation angle, a view angle, and the resolution of the camera (72);
      analyzing the number of pixels of a naked molten steel area contained in the molten steel surface image;
      calculating the size, which has a two-dimensional value, of the naked molten steel (N) by multiplying the pixel size and the number of pixels, and converting the size, which has a two-dimensional value, of the naked molten steel (N) into a size, which has a one-dimensional value, of the naked molten steel (N),
      wherein the converting the size, which has a two-dimensional value, of the naked molten steel (N) into a size, which has a one-dimensional value, of the naked molten steel (N) comprises:

         converting a shape of the naked molten steel (N) into a circular shape having the same size as the size of the naked molten steel (N) and obtaining a diameter of the circular shape converted from the shape of the naked molten steel (N) to obtain the converted size by using mathematical equation 4,
         wherein the refinement method further comprises adjusting a flow rate of a gas (g) supplied to the nozzle unit (11) according to the converted value after the converting of the size, which has a two-dimensional value, of the naked molten steel (N) into the size, which has a one-dimensional value, of the naked molten steel (N),

$$\text{Mathematical equation 4:}$$

$$D_{eq} = \mathrm{sqrt}(\text{the size of the naked molten steel} \times 4/\pi),$$

         wherein sqrt represents square root, and $D_{eq}$ represents the converted size.

6. The refinement method of claim 5, wherein the generating of the molten steel surface image comprises photographing the molten steel surface using the camera in an inclined state by inclining the camera (72) with respect to a vertical direction and generating a molten steel surface image.

7. The refinement method of claim 6, wherein the calculating of the pixel size comprises:

   obtaining a first length in an inclined direction of the photographed area by using the installation height, the installation angle, and the view angle;
   obtaining a second length in a non-inclined direction of the photographed area by using the installation height and the view angle;
   obtaining a size of the photographed area by using the first length and the second length;
   obtaining the pixel size by using a size of the photographed area and the resolution.

8. The refinement method of claim 6, wherein the analyzing of the number of the pixels comprises:

binarizing the molten steel surface image into a bright portion and a dark portion and drawing a closed line at a boundary between the bright portion and the dark portion; and
counting the number of pixels inside the closed line.

**Patentansprüche**

1. Aufbereitungsvorrichtung, die Folgendes umfasst:

eine Behältereinheit (10), die einen oberen Teil und einen Innenraum aufweist, in dem eine Schmelze (M) aufbereitet wird;
eine Düseneinheit (11), die an der Behältereinheit (10) installiert ist, um ein Gas (g) zu blasen;
eine Kameraeinheit (70), die über der Behältereinheit (10) installiert ist, um eine geschmolzene Stahloberfläche der Schmelze (M) zu fotografieren; und
eine Steuereinheit, die dazu konfiguriert ist, eine Größe von blankem geschmolzenen Stahl (N) auf der geschmolzenen Stahloberfläche unter Verwendung eines Bilds der geschmolzenen Stahloberfläche, das von der Kameraeinheit (70) erhalten wird, und Installationsinformationen und Leistungsinformationen der Kameraeinheit (70) zu berechnen,
wobei die Installationsinformationen eine Installationshöhe und einen Installationswinkel der Kameraeinheit umfassen und
die Leistungsinformationen einen Betrachtungswinkel und eine Auflösung der Kameraeinheit umfassen,
wobei das Bild der geschmolzenen Stahloberfläche ein Bild der geschmolzenen Stahloberfläche aus einem einzigen Betrachtungswinkel ist,
wobei die Steuereinheit Folgendes umfasst:

einen Ableiter, der dazu konfiguriert ist, die Installationshöhe in Bezug auf die geschmolzene Stahloberfläche abzuleiten;
einen ersten Rechner, der dazu konfiguriert ist, eine Pixelgröße eines fotografierten Bereichs der Kameraeinheit (70) unter Verwendung einer Installationshöhe, eines Installationswinkels, eines Betrachtungswinkels und einer Auflösung der Kameraeinheit (70) zu berechnen;
einen Analysator, der dazu konfiguriert ist, die Anzahl von Pixeln des Bereichs des blanken geschmolzenen Stahls zu analysieren, die in dem Bild der geschmolzenen Stahloberfläche enthalten sind;
einen zweiten Rechner, der dazu konfiguriert ist, die Größe, die einen zweidimensionalen Wert aufweist, des blanken geschmolzenen Stahls (N) durch Multiplizieren der Pixelgröße und der Anzahl von Pixeln zu berechnen; und
eine Strömungsratensteuerung, die dazu konfiguriert ist, einen Durchmesser eines Kreises, der die gleiche Größe aufweist wie die Größe, die einen zweidimensionalen Wert aufweist, des blanken geschmolzenen Stahls (N) zu erhalten, um den erhaltenen Durchmesser als konvertierte Größe ($D_{eq}$), die einen eindimensionalen Wert aufweist, durch Verwendung einer mathematischen Gleichung 4 zu bestimmen und eine Strömungsrate eines Gases (g), das an die Düseneinheit (11) geliefert wird, gemäß dem konvertierten Wert ($D_{eq}$) einzustellen,

Mathematische Gleichung 4:

$$D_{eq} = \text{sqrt (die Größe des blanken geschmolzenen Stahls x } 4/\pi),$$

wobei sqrt die Quadratwurzel darstellt und $D_{eq}$ die konvertierte Größe darstellt.

2. Aufbereitungsvorrichtung nach Anspruch 1, ferner umfassend eine Abdeckungseinheit (20), die montiert ist, um den offenen oberen Teil der Behältereinheit (10) abzudecken,

wobei ein Durchgangsloch (22) an einer Seite der Abdeckungseinheit (20) definiert ist und
eine Kameraeinheit (70) über dem Durchgangsloch (22) angeordnet ist.

3. Aufbereitungsvorrichtung nach Anspruch 2, ferner umfassend eine Elektrodenleiste (30), die montiert ist, um durch die Abdeckungseinheit (20) zu laufen,

wobei die Elektrodenleiste (30) an einem zentralen Teil der Abdeckungseinheit (20) angeordnet ist und das Durchgangsloch (22) an einer Ecke der Abdeckungseinheit (20) definiert ist und die Kameraeinheit (70) auf eine geneigte Weise installiert ist.

4. Aufbereitungsvorrichtung nach Anspruch 1, wobei die Kameraeinheit (70) Folgendes umfasst:

eine Kamera (72), die dazu konfiguriert ist, die geschmolzene Stahloberfläche zu fotografieren und ein Bild der geschmolzenen Stahloberfläche zu generieren;
ein Gehäuse (71), das dazu konfiguriert ist, die Kamera (72) aufzunehmen;
einen Spülpfad (74), der dazu konfiguriert ist, ein Spülgas zwischen das Gehäuse (71) und die Kamera (72) zu injizieren; und
einen Kühlpfad (73), der dazu konfiguriert ist, ein Kühlmittel in dem Gehäuse (71) zu zirkulieren.

5. Aufbereitungsverfahren unter Verwendung einer Aufbereitungsvorrichtung nach einem der Ansprüche 1-4, wobei das Aufbereitungsverfahren Folgendes umfasst:

Vorbereiten einer Behältereinheit (10), in der eine Schmelze (M) aufgenommen wird;
Sprudeln, während ein Gas (g) in die Schmelze (M) geblasen wird;
Generieren eines Bilds der geschmolzenen Stahloberfläche durch Fotografieren einer geschmolzenen Stahloberfläche der Schmelze unter Verwendung einer Kamera (72), wobei das Generieren des Bilds der geschmolzenen Stahloberfläche ein Bild der geschmolzenen Stahloberfläche aus einem einzigen Betrachtungswinkel generiert, indem die geschmolzene Stahloberfläche unter Verwendung einer Kamera fotografiert wird;
Berechnen einer Größe des blanken geschmolzenen Stahls (N) auf der geschmolzenen Stahloberfläche unter Verwendung eines Bilds der geschmolzenen Stahloberfläche und der Installationsinformationen und der Leistungsinformationen der Kamera (72),
wobei das Generieren des Bilds der geschmolzenen Stahloberfläche ein Bild der geschmolzenen Stahloberfläche aus einem einzigen Betrachtungswinkel generiert, indem die geschmolzene Stahloberfläche unter Verwendung einer Kamera fotografiert wird,
wobei das Berechnen der Größe des blanken geschmolzenen Stahls (N) Folgendes umfasst:

Ableiten der Installationshöhe in Bezug auf die geschmolzene Stahloberfläche;
Berechnen einer Pixelgröße eines fotografierten Bereichs der Kamera (72) unter Verwendung einer Installationshöhe, eines Installationswinkels, eines Betrachtungswinkels und der Auflösung der Kamera (72);
Analysieren der Anzahl von Pixeln eines Bereichs des blanken geschmolzenen Stahls, die in dem Bild der geschmolzenen Stahloberfläche enthalten sind;
Berechnen der Größe, die einen zweidimensionalen Wert aufweist, des blanken geschmolzenen Stahls (N) durch Multiplizieren der Pixelgröße und der Anzahl von Pixeln und Konvertieren der Größe, die einen zweidimensionalen Wert aufweist, des blanken geschmolzenen Stahls (N) in eine Größe, die einen eindimensionalen Wert aufweist, des blanken geschmolzenen Stahls (N),
wobei das Konvertieren der Größe, die einen zweidimensionalen Wert aufweist, des blanken geschmolzenen Stahls (N) in eine Größe, die einen eindimensionalen Wert aufweist, des blanken geschmolzenen Stahls (N) Folgendes umfasst:

Konvertieren der Form des blanken geschmolzenen Stahls (N) in eine kreisförmige Form, die die gleiche Größe wie die Größe des blanken geschmolzenen Stahls (N) aufweist, und Erhalten eines Durchmessers der kreisförmigen Form, die aus der Form des blanken geschmolzenen Stahls (N) konvertiert wurde, um die konvertierte Größe unter Verwendung der mathematischen Formel 4 zu erhalten,
wobei das Aufbereitungsverfahren ferner ein Einstellen einer Strömungsrate eines Gases (g), das an die Düseneinheit (11) geliefert wird, gemäß dem konvertierten Wert nach dem Konvertieren der Größe, die einen zweidimensionalen Wert aufweist, des blanken geschmolzenen Stahls (N) in eine Größe, die einen eindimensionalen Wert aufweist, des blanken geschmolzenen Stahls (N) umfasst,

Mathematische Gleichung 4:

$$D_{eq} = sqrt \text{ (die Größe des blanken geschmolzenen Stahls x } 4/\pi),$$

wobei sqrt die Quadratwurzel darstellt und $D_{eq}$ die konvertierte Größe darstellt.

6. Aufbereitungsverfahren nach Anspruch 5, wobei das Generieren des Bilds der geschmolzenen Stahloberfläche Fotografieren der geschmolzenen Stahloberfläche unter Verwendung der Kamera in einem geneigten Zustand umfasst, indem die Kamera (72) in Bezug auf eine vertikale Richtung geneigt wird und ein Bild der geschmolzenen Stahloberfläche generiert wird.

7. Aufbereitungsverfahren nach Anspruch 6, wobei das Berechnen der Pixelgröße Folgendes umfasst:

Erhalten einer ersten Länge in einer geneigten Richtung des fotografierten Bereichs unter Verwendung der Installationshöhe, des Installationswinkels und des Betrachtungswinkels;
Erhalten einer zweiten Länge in einer nicht geneigten Richtung des fotografierten Bereichs unter Verwendung der Installationshöhe und des Betrachtungswinkels;
Erhalten einer Größe des fotografierten Bereichs unter Verwendung der ersten Länge und der zweiten Länge;
Erhalten der Pixelgröße unter Verwendung einer Größe des fotografierten Bereichs und der Auflösung.

8. Aufbereitungsverfahren nach Anspruch 6, wobei das Analysieren der Anzahl von Pixeln Folgendes umfasst:

Binarisieren des Bilds der geschmolzenen Stahloberfläche in einen hellen Teil und einen dunklen Teil und Zeichnen einer geschlossenen Linie an einer Grenze zwischen dem hellen Teil und dem dunklen Teil; und Zählen der Anzahl von Pixeln innerhalb der geschlossenen Linie.

**Revendications**

1. Appareil d'affinage comprenant :

une unité de récipient (10) comportant une portion supérieure ouverte et un espace interne dans lequel une matière fondue (M) est affinée ;
une unité de buse (11) installée sur l'unité de récipient (10) pour souffler un gaz (g) ;
une unité d'appareil photo (70) installée au-dessus de l'unité de récipient (10) pour photographier une surface d'acier en fusion de la matière fondue (M) ; et
une unité de commande configurée pour calculer une taille de l'acier en fusion nu (N) sur la surface d'acier en fusion en utilisant une image de surface d'acier en fusion obtenue à partir de l'unité d'appareil photo (70) et des informations d'installation et des informations de performance de l'unité d'appareil photo (70),
dans lequel les informations d'installation comprennent une hauteur d'installation et un angle d'installation de l'unité d'appareil photo, et
les informations de performance comprennent un angle de vue et une résolution de l'unité d'appareil photo,
dans lequel l'image de surface d'acier en fusion est une image de surface d'acier en fusion à point de vue unique,
dans lequel l'unité de commande comprend :

un dispositif de déduction configuré pour déduire la hauteur d'installation par rapport à la surface d'acier en fusion ;
un premier calculateur configuré pour calculer une taille de pixel d'une zone photographiée de l'unité d'appareil photo (70) en utilisant une hauteur d'installation, un angle d'installation, un angle de vue et une résolution de l'unité d'appareil photo (70) ;
un analyseur configuré pour analyser le nombre de pixels de la zone d'acier en fusion nu contenue dans l'image de surface d'acier en fusion ;
un second calculateur configuré pour calculer la taille, qui a une valeur bidimensionnelle, de l'acier en fusion nu (N) en multipliant la taille de pixel et le nombre de pixels ; et
un contrôleur de débit configuré pour obtenir un diamètre d'un cercle ayant la même taille que la taille, qui a une valeur bidimensionnelle, de l'acier en fusion nu (N) pour déterminer le diamètre obtenu comme une taille convertie ($D_{eq}$) ayant une valeur unidimensionnelle en utilisant l'équation mathématique 4, et ajuster un débit d'un gaz (g) fourni à l'unité de buse (11) selon la valeur convertie ($D_{eq}$) ,

```
Équation mathématique 4 :

D_eq = sqrt (la taille de l'acier fondu nu × 4/π),
```

dans lequel sqrt représente une racine carrée, et $D_{eq}$ représente la taille convertie.

2. Appareil d'affinage selon la revendication 1, comprenant en outre une unité de couverture (20) montée pour couvrir la portion supérieure ouverte de l'unité de récipient (10),

   dans lequel un trou de passage (22) est défini sur un côté de l'unité de couverture (20), et
   une seule unité d'appareil photo (70) est disposée au-dessus du trou de passage (22).

3. Appareil d'affinage selon la revendication 2, comprenant en outre une barre d'électrode (30) montée pour traverser l'unité de couverture (20),

   dans lequel la barre d'électrode (30) est disposée au niveau d'une portion centrale de l'unité de couverture (20), et le trou de passage (22) est défini sur un bord de l'unité de couverture (20), et
   l'unité d'appareil photo (70) est installée de manière inclinée.

4. Appareil d'affinage selon la revendication 1, dans lequel l'unité d'appareil photo (70) comprend :

   un appareil photo (72) configuré pour photographier la surface d'acier en fusion et générer une image de surface d'acier en fusion ;
   un logement (71) configuré pour accueillir l'appareil photo (72) ;
   une voie de purge (74) configurée pour injecter un gaz de purge entre le logement (71) et l'appareil photo (72) ; et
   une voie de refroidissement (73) configurée pour faire circuler un liquide de refroidissement à l'intérieur du logement (71).

5. Procédé d'affinage utilisant un appareil d'affinage selon l'une quelconque des revendications 1 à 4, le procédé d'affinage comprenant :

   la préparation d'une unité de récipient (10) dans laquelle est accueillie une matière fondue (M) ;
   la formation de bulles lors du soufflage d'un gaz (g) vers la matière fondue (M) ;
   la génération d'une image de surface d'acier en fusion en photographiant une surface d'acier en fusion à l'aide d'un appareil photo (72), dans lequel la génération de l'image de surface d'acier en fusion génère une image de surface d'acier en fusion à point de vue unique en photographiant la surface d'acier en fusion à l'aide d'un seul appareil photo ;
   le calcul d'une taille d'un acier en fusion nu (N) sur la surface d'acier en fusion en utilisant l'image de surface d'acier en fusion et les informations d'installation et les informations de performance de l'appareil photo (72), dans lequel la génération de l'image de surface d'acier en fusion génère une image de surface d'acier en fusion à point de vue unique en photographiant la surface d'acier en fusion à l'aide d'un seul appareil photo, dans lequel le calcul de la taille de l'acier en fusion nu (N) comprend :

      la déduction de la hauteur d'installation par rapport à la surface d'acier en fusion ;
      le calcul d'une taille de pixel d'une zone photographiée de l'appareil photo (72) en utilisant une hauteur d'installation, un angle d'installation, un angle de vue et une résolution de l'appareil photo (72) ;
      l'analyse du nombre de pixels d'une zone d'acier en fusion nu contenue dans l'image de surface d'acier en fusion ;
      le calcul de la taille, qui a une valeur bidimensionnelle, de l'acier en fusion nu (N) en multipliant la taille de pixel et le nombre de pixels, et en convertissant la taille, qui a une valeur bidimensionnelle, de l'acier en fusion nu (N) en une taille, qui a une valeur unidimensionnelle, de l'acier en fusion nu (N), dans lequel la conversion de la taille, qui a une valeur bidimensionnelle, de l'acier en fusion nu (N) en une taille, qui a une valeur unidimensionnelle, de l'acier en fusion nu (N) comprend :

         la conversion d'une forme de l'acier en fusion nu (N) en une forme circulaire ayant la même taille que la taille de l'acier en fusion nu (N) et l'obtention d'un diamètre de la forme circulaire convertie à partir de la forme de l'acier en fusion nu (N) pour obtenir la taille convertie en utilisant l'équation mathématique 4,

le procédé d'affinage comprenant en outre le réglage d'un débit d'un gaz (g) fourni à l'unité de buse (11) selon la valeur convertie après la conversion de la taille, qui a une valeur bidimensionnelle, de l'acier en fusion nu (N) en la taille, qui a une valeur unidimensionnelle, de l'acier en fusion nu (N),

```
Équation mathématique 4 :

D_eq = sqrt (la taille de l'acier en fusion nu × 4/π),
```

dans lequel sqrt représente une racine carrée, et $D_{eq}$ représente la taille convertie.

6. Procédé d'affinage selon la revendication 5, dans lequel la génération de l'image de surface d'acier en fusion comprend la photographie de la surface d'acier en fusion à l'aide de l'appareil photo dans un état incliné en inclinant l'appareil photo (72) par rapport à une direction verticale et la génération d'une image de surface d'acier fondu.

7. Procédé d'affinage selon la revendication 6, dans lequel le calcul de la taille de pixel comprend :

l'obtention d'une première longueur dans une direction inclinée de la zone photographiée en utilisant la hauteur d'installation, l'angle d'installation et l'angle de vue ;
l'obtention d'une seconde longueur dans une direction non inclinée de la zone photographiée en utilisant la hauteur d'installation et l'angle de vue ;
l'obtention d'une taille de la zone photographiée en utilisant la première longueur et la seconde longueur ;
l'obtention de la taille de pixel en utilisant une taille de la zone photographiée et la résolution.

8. Procédé d'affinage selon la revendication 6, dans lequel l'analyse du nombre des pixels comprend :

la binarisation de l'image de surface d'acier en fusion en une portion claire et une portion sombre et le tracé d'une ligne fermée à une frontière entre la portion claire et la portion sombre ; et
le décompte du nombre de pixels à l'intérieur de la ligne fermée.

FIG. 1

FIG. 2

## FIG. 3

FIG. 4

FIG. 5

(a)          (b)

FIG. 6

(a)　　　　　　(b)　　　　　　(c)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101779150 B1
- KR 1020150050822 A
- KR 20120073412
- KR 20010057957
- CN 108241384
- CN 107608397